# FASCICULE DE BREVET EUROPEEN

(11) **EP 1 703 993 B1**
(45) Date de publication et mention de la délivrance du brevet: **21.04.2010**
(21) Numéro de dépôt: 04805501.6
(22) Date de dépôt: 22.11.2004
(51) Int. Cl.: B05C 13/00, B05C 3/09, G02C 7/02

(54) **PROCEDE DE TRAITEMENT PAR TREMPAGE D'ELEMENTS OPTIQUES**
VERFAHREN ZUR TAUCHBEHANDLUNG VON OPTISCHEN ELEMENTEN
METHOD FOR IMMERSION PROCESSING OF OPTICAL ELEMENTS

(30) Priorité: 08.01.2004 FR 0400110
(43) Date de publication de la demande: 27.09.2006
(73) Titulaire: ESSILOR INTERNATIONAL (Compagnie Générale d'Optique), 94227 Charenton (FR)
(72) Inventeur: CARON, Pierre, Essilor International, F-94227 Charenton (FR); CRETIER, Annette, Essilor International, F-94227 Charenton (FR); GASCONS, Annick, Essilor International, F-94227 Charenton (FR)
(74) Mandataire: Orsini, Fabienne
(86) Numéro de dépôt international: PCT/FR2004/002970
(87) Numéro de publication internationale: WO 2005/075108

(56) Documents cités:
- DE-U- 1 728 469
- FR-A- 1 121 357
- GB-A- 1 361 113
- PATENT ABSTRACTS OF JAPAN vol. 2002, no. 03, 3 avril 2002 (2002-04-03) -& JP 2001 311914 A (SEIKO EPSON CORP), 9 novembre 2001 (2001-11-09)

## Description

### DOMAINE TECHNIQUE AUQUEL SE RAPPORTE L'INVENTION

La présente invention se rapporte de manière générale à la fabrication d'éléments optiques en matière organique, tels que des lentilles ophtalmiques correctrices et/ou solaires, des lentilles d'instruments ou des éléments d'optique de précision. Elle s'intéresse plus précisément au traitement de surface d'un tel élément par dépôt d'une couche de revêtement au moyen d'un trempage dans un bain liquide et a pour objet une bague destinée à servir d'interface de préhension de l'élément en vue de son trempage.

### ARRIERE-PLAN TECHNOLOGIQUE

Pour fabriquer une lentille optique, et notamment une lentille ophtalmique, on forme classiquement par moulage, thermoformage et/ou usinage un substrat transparent en résine synthétique ou en verre minéral, sur lequel sont ensuite déposées une ou plusieurs couches de revêtement conférant à la lentille diverses propriétés optiques ou mécaniques telles que la résistance aux chocs ou à l'abrasion, l'atténuation des reflets, la photochromie, etc. Ainsi, typiquement, dépose-t-on successivement sur au moins l'une des faces d'une lentille ophtalmique, une couche dite primaire, une couche dure de résistance à l'abrasion et enfin, éventuellement, une couche anti-reflet. La couche primaire favorise l'adhérence de la couche dure et renforce généralement la résistance au choc. Les couches primaires et les couches dures sont généralement constituées de vernis.

Dans les processus industriels de fabrication des lentilles notamment ophtalmiques, le dépôt de ces couches de vernis s'effectue par centrifugation ou trempage dans un bain d'une solution ou dispersion du vernis sur la face concernée du substrat. Lorsque l'on procède par trempage, procédé le plus économique, on utilise un outillage servant à la préhension de la lentille en vue de sa manipulation et en particulier de son immersion dans le bain de traitement. Un tel outillage de préhension est notamment connu du document JP2001311914. Il consiste typiquement en une pince individuelle à trois branches saisissant chaque lentille sur sa tranche en trois zones de contact ponctuel ou linéaire de sa périphérie, avec deux zones de contact latérales et une zone de contact inférieure. Pour le traitement en plus grand nombre, l'outillage peut aussi consister en un "panier" capable d'accueillir simultanément plusieurs lentilles et offrant pour chacune d'elles les trois zones d'appui précitées.

Il s'avère que l'utilisation de cet outillage génère sur la lentille des défauts consistant en l'apparition de coulures et/ou de ménisques de vernis solidifiés. Ces ménisques en particulier consistent en des zones de surépaisseur de matière déposée qui prennent naissance en périphérie, aux points de contact de la lentille avec l'outillage, et pénètrent radialement de plusieurs millimètres vers le centre de la lentille pour affecter la partie utile de cette dernière. Ces zones de surépaisseurs sont préjudiciables à la qualité du revêtement et plus généralement à l'esthétique, voire aux fonctions optiques de la lentille. Ces surépaisseurs locales sont particulièrement indésirables dans le cas du dépôt d'une couche mince devant présenter une épaisseur uniforme, comme cela est le cas en particulier pour les couches dites "quart d'onde" visant à réduire l'intensité du phénomène optique de franges d'interférence apparaissant à l'interface entre le substrat et la couche de revêtement et lié à la différence d'indice de ces derniers.

### OBJET DE L'INVENTION

Le but principal de la présente invention est de fournir un accessoire de préhension permettant le dépôt par trempage, sur une lentille optique, d'une couche de revêtement qui soit d'épaisseur uniforme et exempte en particulier de zones de surépaisseur en périphérie.

Un but secondaire de la présente invention est que l'accessoire ainsi proposé puisse être utilisé avec les outillages de type pinces ou paniers existants, sans nécessiter d'adaptation de ceux-ci.

Pour résoudre ce problème, on propose selon l'invention un procédé tel que défini dans la revendication 1.

La demanderesse a en effet conçu et testé différentes formes de contact entre l'outillage de préhension et la lentille. Il ressort de ces travaux que, dès lors qu'un contact de forme globalement ponctuelle existe avec le bord de la lentille, un défaut de coulure ou de surépaisseur, notamment du type ménisque, apparaît. C'est pourquoi la solution proposée vise à affranchir l'opération de trempage de ce type de contact. La bague de préhension selon invention fait en effet office, lors de cette opération, d'une interface de préhension interposée entre la lentille à traiter et l'outillage servant à sa manipulation. Grâce à son arceau de cerclage, la bague est clippée sur la lentille à traiter en embrassant sa périphérie et exerce alors un contact linéaire continu sur cette périphérie. La bague étant orientée de telle sorte que ses deux becs d'égouttement pointent vers le bas, symétriquement par rapport à un plan médian vertical, la matière de revêtement liquide déposée lors du trempage s'écoule sur les faces de la lentilles et, en périphérie, le long de l'arceau de cerclage et de drainage de la bague. In s'opère ainsi sous le simple effet de la gravité un drainage canalisé du vernis encore liquide. Aux deux extrémités de l'arceau, les becs d'égouttement opèrent, en s'écartant de la lentille, une évacuation du surplus de matière s'écoulant le long de l'arceau, ce qui évite toute accumulation d'une surépaisseur de matière au contact de la lentille.

On notera par ailleurs que l'utilisation de la bague selon l'invention est particulièrement commode, puisqu'il suffit d'engager la bague, à la faveur de son ouverture et de son élasticité propre, sur le bord de la lentille, si la façon d'une pince à clipper telle qu'une pince à pantalon pour cycliste. La bague peut ensuite être saisie et manipulée, avec la lentille à traiter qu'elle enserre, d'une manière et avec un outillage quelconques, évitant tout contact direct de cet outillage de préhension avec la lentille. Il est d'ailleurs intéressant de souligner ici que la bague de préhension selon l'invention peut intervenir en simple complément d'un outillage de préhension classique préexistant, ce qui permet d'économiser les coûts élevés qu'imposerait le remplacement complet des parcs d'outillage en service.

Selon une caractéristique avantageuse de l'invention, l'arceau présente une face intérieure de contact avec le bord de la lentille optique, qui est longitudinalement continue au second ordre. Autrement dit, cette face intérieure de contact est dépourvue d'arrête vive transversale, ce qui favorise l'écoulement longitudinal du vernis. De préférence alors, les becs d'égouttement présentent une face intérieure prolongeant celle de l'arceau avec une continuité longitudinale de second ordre. Avantageusement encore, toujours pour faciliter l'égouttement, les extrémités libres des becs d'égouttement sont biseautées.

Selon une autre caractéristique avantageuse de l'invention, l'arceau étant formé d'un profilé dont la section présente un côté intérieur de contact avec la lentille optique, un côté extérieur et deux côtés latéraux, l'un au moins des côtés intérieur et extérieur de la section de l'arceau est en renfoncement et se raccorde aux côtés latéraux avec des angles vifs. Cette forme d'exécution facilite l'écoulement du vernis le long de la bague et ménage en particulier une gouttière ou conduit d'écoulement de matière entre le chant de la lentille et la face intérieure concave de l'arceau.

Selon une autre caractéristique avantageuse du procédé selon l'invention, l'arceau de cerclage présente une face extérieure possédant deux portions de préhension striées diamétralement opposées. Ces portions striées facilitent et fiabilisent la saisie de la bague avec sa lentille par une pince de type classique.

### DESCRIPTION DETAILLEE D'UN EXEMPLE DE REALISATION

D'autres caractéristiques et avantages de l'invention apparaîtront à la lecture de la description qui suit d'un mode de réalisation particulier, donnée à titre d'exemple non limitatif.

Il sera fait référence aux dessins présentés en annexe, parmi lesquels :
- la figure 1 est une vue en perspective d'une bague de préhension utilisée dans le procédé selon l'invention ;
- la figure 2 est une vue en plan de la bague de la figure 1 ;
- la figure 3 est une vue en coupe suivant la ligne III-III de la figure 2 ;
- la figure 4 est une vue en perspective d'une bague de préhension selon une variante de réalisation ;
- la figure 5 est une vue en perspective illustrant la saisie d'une lentille ophtalmique au moyen d'un outillage classique et de la bague de préhension de la figure 4, en vue de son traitement par trempage.

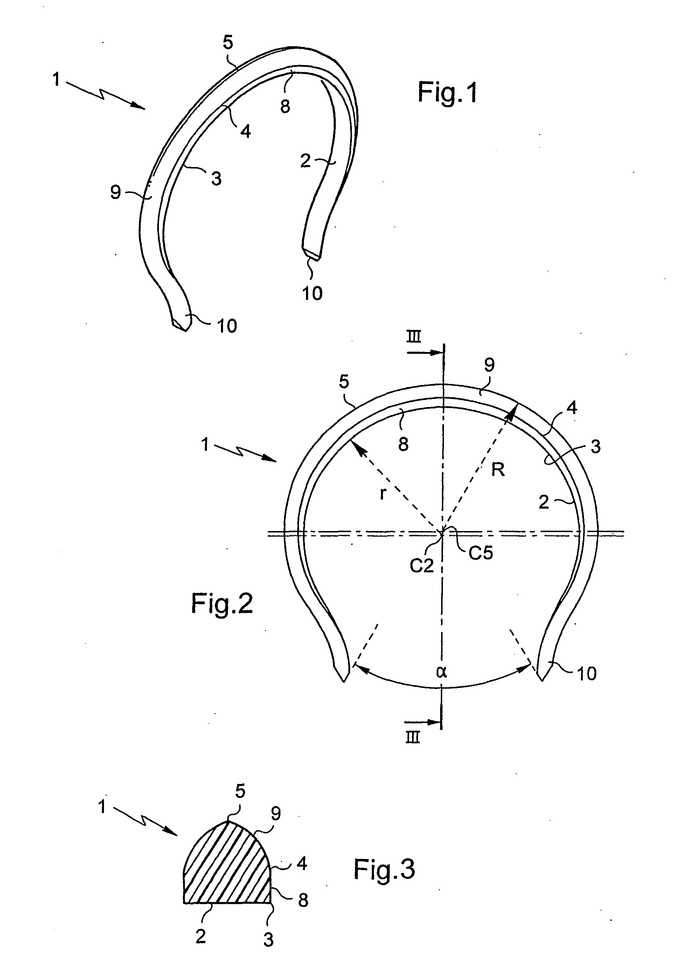

En référence aux figures, et en particulier à la figure 1, la bague de préhension utilisée dans le procédé selon l'invention comporte un arceau 1 de cerclage du bord d'une lentille optique.

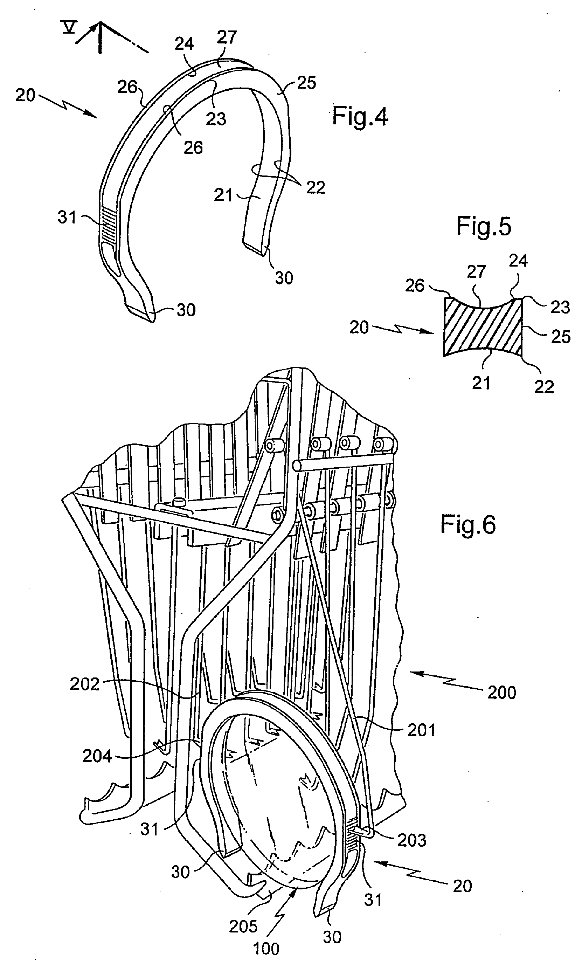

Cette lentille optique consiste en l'espèce, typiquement, en une lentille ophtalmique à la surface de laquelle on souhaite déposer une couche de vernis, comme cela sera mieux expliqué ultérieurement en référence à la figure 4.

L'arceau de cerclage 1 est alors destiné à se clipper autour de la lentille sur son chant. L'arceau 1 ne forme pas un cercle complet, mais présente une ouverture à la faveur de laquelle la bague peut être clippée sur l'élément optique. L'arceau 1 forme ainsi un arc de plus de 180 degrés, de préférence compris entre 250 et 320 degrés. Dans l'exemple illustré, particulièrement optimisé, l'arceau forme un arc de 300 degrés, avec une ouverture, notée alpha (α) sur la figure 2, de 60 degrés, à 10% près.

Pour cette fixation par cerclage clippé, l'arceau 1 est réalisé en un matériau élastiquement flexible. La raideur du matériau retenu doit résulter d'un compromis, pour assurer une fixation fiable de la bague avec la lentille, sans pour autant contraindre cette dernière. Aux essais, des résultats satisfaisants ont été obtenus avec un arceau exerçant sur la lentille un effort de maintien de l'ordre de quelques Newton. Aux essais, on a ainsi retenu, pour une lentille d'un diamètre de 65 mm, un effort compris entre 3 et 8 N.

Ce matériau doit en outre résister aux traitements qu'il est destiné à subir avec les lentilles qu'il sera amené à équiper et rester inerte vis-à-vis de ces traitements. Il faut en particulier rechercher une bonne tenue mécanique en température, sans effondrement du module d'Young jusqu'à des températures de l'ordre de 100°C, ainsi qu'une bonne résistance chimique aux solutions basiques chaudes, solvants alcooliques, cetone, etc. Il est préférable que la température de fusion du matériau soit supérieure à 150°C et que la température de transition vitreuse soit supérieure à - 20°C. On pourra par exemple utiliser efficacement comme matériau constitutif de la bague un Polyamide 66 avec une température de fusion de l'ordre de 270°C et un module à température ambiante de 2840 MPa ou encore un polypropylène avec une température de fusion de 180°C, une température de transition vitreuse de -10°C et un module de 1000 à 1500 MPa à température ambiante.

L'arceau de cerclage 1 présente une face intérieure 2 destinée à entrer en contact avec le bord de l'élément optique, c'est-à-dire en l'espèce le chant de la lentille. Cette face intérieure 2 est longitudinalement continue au second ordre. Elle est donc dépourvue d'arrête vive transversale, ce qui favorise l'écoulement longitudinal du vernis au sortir du bain, comme cela sera mieux expliqué ultérieurement.

En revanche, on observe que l'arceau 1 présente extérieurement et latéralement des arrêtes longitudinales vives 3, 4, 5 en forme d'arcs de cercles, destinées à favoriser et canaliser l'écoulement de matière liquide et, partant, améliorer la qualité du drainage recherché au sortir du bain de traitement.

Plus précisément, la face intérieure 2 de l'arceau 1 est ici cylindrique et se raccorde par les deux arrêtes 3 (dont une seule est visible aux figures 1 et 2) à deux flancs plats 8 auxquels se raccorde une face extérieure 9 réalisée en deux parties de forme convexe, par exemple conique ou torique, réunies par l'arrête 5 formant une ligne de crête.

En référence à la figure 3, l'arceau de cerclage et de drainage 1 est ainsi formé d'un profilé dont la section présente un côté intérieur correspondant à la face intérieure 2 de contact avec l'élément optique, un côté extérieur en forme d'arc brisé, correspondant à la face extérieure 9 et présentant un sommet anguleux correspondant à l'arrête 5, et deux côtés latéraux correspondant aux flancs 8 et raccordés au côté intérieur et au côté extérieur par deux points anguleux correspondant respectivement aux arrêtes 3 et 4. Au repos, le brin neutre de l'arceau 1 présente, globalement, une forme d'arc de cercle.

L'arceau de cerclage 1 possède, au repos, un diamètre intérieur correspondant au diamètre de la face intérieure 2, noté r sur la figure 2, et un diamètre extérieur, noté R, et correspondant au diamètre de l'arrête de sommet 5. Le centre C₂ de l'arrête 2 est légèrement décalé vers le bas, en direction de l'ouverture alpha (α), par rapport au centre C₅ de l'arrête 5. Les arrêtes 4 et 5 étant concentriques, l'arrête 3 rejoint tangentiellement l'arrête 4. En l'espèce, pour la préhension de lentilles présentant classiquement un diamètre de 65 mm, on a retenu les valeurs suivantes : r = 28,5 mm et R = 32,5 mm.

La bague est en outre pourvue, à chacune des deux extrémités libres de l'arceau de cerclage 1, d'un bec d'égouttement 10 tourné vers l'extérieur.

Les becs d'égouttement présentent une face intérieure prolongeant celle de l'arceau de cerclage 1 avec une continuité longitudinale de second ordre.

Comme cela est mieux visible sur la figure 2, les extrémités libres des becs d'égouttement sont biseautées, afin de faciliter l'évacuation par gravité des gouttes de matière. Dans l'exemple illustré, les biseaux d'extrémité ainsi ménagés forment entre eux un dièdre présentant un angle au sommet égal à l'angle d'ouverture alpha (α).

Les figures 4 et 5 illustrent une variante d'exécution d'une bague utilisée dans le procédé selon l'invention. Comme précédemment, cette bague comporte un arceau ouvert 20 pourvu à ces extrémités libres de becs d'égouttement 30 pointant vers le bas.

Dans cette variante, l'arceau 20 possède des faces intérieure 21 et extérieure 27 concaves et des flancs plats 25. Plus précisément, comme cela est mieux visible sur la figure 5, le côté intérieur de la section de l'arceau 20, correspondant à la face intérieure 21, est en forme d'arc de cercle en renfoncement et se raccorde directement aux côtés latéraux, correspondant aux flancs 25, avec des angles vifs. Le côté extérieur de la section de l'arceau 20, correspondant à la face extérieure 27, comporte une partie centrale principale en forme d'arc de cercle en renfoncement, se raccordant aux côtés latéraux 25 par l'intermédiaire de deux méplats 26 formant des angles vifs 23, 24 avec les côtés latéraux 25 et la partie centrale.

La face extérieure de l'arceau de cerclage possède deux portions de préhension striées 31, diamétralement opposées, globalement situées sur le diamètre horizontal de l'arceau 20.

En service, comme cela est illustré par la figure 6, on utilise un outillage servant à la préhension de lentilles 100 en vue de leur manipulation et en particulier de leur immersion dans le bain de traitement. Cet outillage de préhension de type classique consiste ici, typiquement, en un panier 200 capable d'accueillir simultanément plusieurs lentilles 100 et offrant pour chacune d'elles trois zones d'appui, avec deux zones de saisie latérales et une zone d'appui inférieure.

Chaque lentille 100 est préalablement pourvue d'une bague de préhension telle que la bague 20 précédemment décrite.

Pour l'accueil de chaque lentille 100, le panier 200 comporte une pince à deux branches 201, 202 saisissant la bague 20 de chaque lentille 100 par sa face extérieure, les portions striées 31 coopérant en leur offrant prise avec des griffes coudées 203, 204 ménagées à l'extrémité des pinces 201, 202. Un socle 205 offre un appui direct à la tranche de la lentille 100 dans sa partie inférieure.

## Revendications

1. Procédé de traitement par trempage d'un élément optique, dans lequel l'élément optique est maintenu, lors de son trempage, dans une bague de préhension comportant un arceau (1 ;20) de drainage et de cerclage du bord de l'élément optique, formant un arc de plus de 180 degrés et pourvu, à chacune de ses deux extrémités, d'un bec d'égouttement (10 ;30) tourné vers l'extérieur.

2. Procédé selon la revendication précédente, dans lequel l'arceau (1 ;20) présente une face intérieure (2 ;21) de contact avec le bord de l'élément optique, qui est longitudinalement continue au second ordre.

3. Procédé selon la revendication précédente, dans lequel les becs d'égouttement (10 ;30) présentent une face intérieure prolongeant celle de l'arceau avec une continuité longitudinale de second ordre.

4. Procédé selon l'une des revendications précédentes, dans lequel l'arceau (1 ;20) forme un arc compris entre 220 et 280 degrés.

5. Procédé selon la revendication précédente, dans lequel l'arceau (1 ;20) forme un arc de 250 degrés à 10% près.

6. Procédé selon l'une des revendications précédentes, dans lequel l'arceau (1 ;20) est élastiquement flexible.

7. Procédé selon l'une des revendications précédentes, dans lequel les extrémités libres des becs d'égouttement (10 ;30) sont biseautées.

8. Procédé selon l'une des revendications précédentes, dans lequel l'arceau (1 ;20) est formé d'un profilé dont la section présente un côté intérieur de contact avec l'élément optique, un côté extérieur et deux côtés latéraux (8 ; 25), l'un au moins des côtés intérieur et extérieur de la section de l'arceau (1 ;20) se raccorde aux côtés latéraux (8 ; 25) avec des angles vifs.

9. Procédé selon la revendication précédente, dans lequel l'un au moins des côtés intérieur et extérieur de la section de l'arceau (20) est ménagé en renfoncement.

10. Procédé selon l'une des revendications précédentes, dans lequel l'arceau (20) de cerclage présente une face extérieure possédant deux portions de préhension striées (31) diamétralement opposées.

11. Procédé selon l'une des revendications précédentes, dans lequel la bague de préhension est, lors de son trempage, orientée de telle sorte que ses deux becs d'égouttement (10 ;30) pointent vers le bas.

## Claims

1. A method for dip treatment of an optical element, wherein said optical element is held, while it is being dipped, by a holding ring, the ring comprising a hoop (1; 20) for draining and encircling the edge of the optical element, forming an arc over more than 180° and provided at each of its two ends with an outwardly-directed drip tab (10; 30).

2. A method according to the preceding claim, wherein the hoop (1; 20) presents an inside face (2; 21) in contact with the edge of the optical element, which inside face is longitudinally continuous to the second order.

3. A method according to the preceding claim, wherein each drip tab (10; 30) presents an inside face extending the inside face of the hoop with longitudinal continuity to the second order.

4. A method according to any preceding claim, wherein the hoop (1; 20) forms an arc lying in the range 250° to 280°.

5. A method according to the preceding claim, wherein the hoop (1; 20) forms an arc of 250° to within 100.

6. A method according to any preceding claim, wherein the hoop (1; 20) is elastically flexible.

7. A method according to any preceding claim, wherein the free ends of the drip tabs (10; 30) are chamfered.

8. A method according to any preceding claim, wherein the hoop (1; 20) is constituted by a section member of section that presents an inside for contacting the optical element, an outside, and two lateral sides (8; 25), at least one of the inside and the outside of the section of the hoop (1; 20) connecting to the lateral sides (8; 25) via sharp angles.

9. A method according to the preceding claim, wherein at least one of the inside and the outside of the section of the hoop (20) has a setback formed therein.

10. A method according to any preceding claim, wherein the encircling arc (20) presents an outside face possessing two diametrically opposite striated holding portions (31).

11. A method according to any preceding claim, wherein, while it is being dipped, the holding ring is oriented in such a manner that both of its drip tabs (10; 30) point downwards.

## Patentansprüche

1. Verfahren zur Tauchbeschichtung eines optischen Elements, bei dem das optische Element beim Eintauchen von einem Greifring gehalten wird, der einen Bügel (1, 20) für die Drainage und das Einfassen des Rands des optischen Elements umfasst, welcher einen Bogen von über 180 Grad bildet und an jedem seiner beiden Enden mit einem nach außen gerichteten Abtropfschnabel (10, 30) versehen ist.

2. Verfahren nach vorausgehendem Anspruch, bei dem der Bügel (1, 20) eine Innenseite (2, 21) für den Kontakt mit dem Rand des optischen Elements aufweist, die eine longitudinale Kontinuität zweiten Ranges hat.

3. Verfahren nach vorausgehendem Anspruch, bei dem die Abtropfschnäbel (10,30) eine Innenseite haben, die die des Bügels mit einer longitudinalen Kontinuität zweiten Ranges fortsetzt.

4. Verfahren nach einem der vorausgehenden Ansprüche, bei dem der Bügel (1, 20) einen Bogen zwischen 220 und 280 Grad bildet.

5. Verfahren nach vorausgehendem Anspruch, bei dem der Bügel (1, 20) mit einer Genauigkeit von 10 % einen Bogen von 250 Grad bildet.

6. Verfahren nach einem der vorausgehenden Ansprüche, bei dem der Bügel (1, 20) elastisch biegsam ist.

7. Verfahren nach einem der vorausgehenden Ansprüche, bei dem die freien Enden der Abtropfschnäbel (10, 30) abgeschrägt sind.

8. Verfahren nach einem der vorausgehenden Ansprüche, bei dem der Bügel (1, 20) aus einem Profil gebildet ist, dessen Abschnitt eine Innenseite für den Kontakt mit dem optischen Element, eine Außenseite und zwei Seiten (8, 25) aufweist, wobei sich mindestens eine der Innen- und Außenseiten des Bügelabschnitts (1, 20) mit scharfen Kanten an die Seiten (8, 25) anschließt.

9. Verfahren nach vorausgehendem Anspruch, bei dem mindestens eine der Innen- und Außenseiten des Bügelabschnitts (20) mit einem Einzug ausgearbeitet ist.

10. Verfahren nach einem der vorausgehenden Ansprüche, bei dem der Einfassbügel (20) eine Außenseite mit zwei gegenüberliegenden gerippten (31) Greifabschnitten aufweist.

11. Verfahren nach einem der vorausgehenden Ansprüche, bei dem der Greifring beim Eintauchen so orientiert ist, dass seine zwei Abtropfschnäbel (10, 30) nach unten gerichtet sind.
